(19) Europäisches Patentamt / European Patent Office / Office européen des brevets

(11) **EP 2 270 465 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**29.06.2016   Patentblatt 2016/26**

(45) Hinweis auf die Patenterteilung:
**27.06.2012   Patentblatt 2012/26**

(21) Anmeldenummer: **10010663.2**

(22) Anmeldetag: **11.04.2003**

(51) Int Cl.:
*G01N 1/22* *(2006.01)*        *G01N 15/06* *(2006.01)*

(54) **Verfahren und Vorrichtung zur Detektion, Charakterisierung und/oder Elimination von Schwebeteilchen**

Process and apparatus for detecting, characterising and/or eliminating particles

Procédé et dispositif pour la détection, caractérisation et/ou élimination de particules

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**05.01.2011   Patentblatt 2011/01**

(62) Dokumentnummer(n) der früheren Anmeldung(en) nach Art. 76 EPÜ:
**03405248.0 / 1 467 194**

(73) Patentinhaber: **Testo AG**
**79853 Lenzkirch (DE)**

(72) Erfinder:
• **Burtscher, Heinz**
  **8964 Rudolfstetten (CH)**
• **Kasper, Markus**
  **8964 Rudolfstetten (CH)**
• **Matter, Ulrich**
  **5400 Baden (CH)**

(74) Vertreter: **Maucher Börjes Jenkins**
**Patent- und Rechtsanwälte**
**Urachstrasse 23**
**79102 Freiburg i. Br. (DE)**

(56) Entgegenhaltungen:
EP-A- 1 251 344        EP-A2- 1 113 257
EP-A2- 1 525 446       EP-B1- 0 155 793
EP-B1- 0 390 941       EP-B1- 0 471 174
EP-B1- 0 611 962       EP-B1- 1 249 695
WO-A-01/84116          WO-A1-01/84111
WO-A1-92/04611         WO-A1-02/070116
WO-A2-99/35206         WO-A2-03/035206
DE-A1- 4 437 739       JP-A- H11 211 631
JP-A- 2001 188 031     JP-A- 2001 249 065
JP-A- 2002 214 082     JP-A- 2003 075 308
US-A- 5 109 708        US-A- 6 016 711
US-B1- 6 439 027

• MATTER U. ET AL: 'Dynamic Field Measurements of Submicron Particles from Diesel Engines' ENVIRONMENTAL SCIENCE & TECHNOLOGY Bd. 33, Nr. 11, 1999, Seiten 1946 - 1952
• STOLZENBURG M.R. ET AL: 'An Ultrafine Aerosol Condensation Nucleus Counter' AEROSOL SCIENCE AND TECHNOLOGY Bd. 14, 1991, Seiten 48 - 65
• SAE Technical Paper Series 2000-01-1998

EP 2 270 465 B2

## Beschreibung

Die Erfindung betrifft das Gebiet der Detektion, Charakterisierung und/oder Elimination von Schwebeteilchen in einem Trägergas. Insbesondere betrifft sie ein Verfahren und eine Vorrichtung zum Charakterisieren, Trennen und/oder Eliminieren von Schwebeteilchen in einem Trägergas.

Abgase aus Emissionsquellen in Haushalt, Privat- und Güterverkehr und Industrie enthalten Schwebeteilchen. Ein Stoffgemisch aus Schwebeteilchen.und einem Trägergas wird oft als AEROSOL bezeichnet. Insbesondere submikroskopische Schwebeteilchen geben Anlass zu öffentlicher Besorgnis, da sie lungengängig sind und gesundheitliche Auswirkungen haben können.

Für die Charakterisierung von Emissionsquellen und Messungen von Schwebeteilchen in Abgasen muss in einem ersten Schritt eine unverfälschte Probe gewonnen werden, deren Schwebeteilchenkonzentration eine direkte Aussage über die Menge der von der Emissionsquelle emittierten schädlichen Schwebeteilchen erlaubt. Im Weiteren muss eine Messmethode zur Verfügung stehen, die eine möglichst aussagekräftige Charakterisierung der Schwebeteilchen unter Berücksichtigung von deren Schädlichkeit ermöglicht.

Für die Partikelmessung werden traditionell gravimetrische Methoden angewendet: Die Masse von bspw. in einem Filter abgeschiedenen Partikel wird gemessen und dient als Indikator für die Schädlichkeit des Abgases. Nachteilig ist, dass ausgerechnet die besonders gefährlichen weil lungengängigen kleinen und mittelgrossen Partikel im Vergleich zu den grossen Partikeln nicht ins Gewicht fallen.

Bei der Messung von Partikelemissionen von Motoren und Fahrzeugen gewinnt daher die Anzahl der emittierten Partikel als Kenngrösse an Bedeutung.

Es wäre wünschenswert, eine Messmethode und eine entsprechende Vorrichtung zur Verfügung zu haben, welche schädlichkeitsgerechtere Messresultate als gravimetrische Messungen liefern und bspw. die Partikelanzahl anstatt deren Gesamtmasse ermitteln. Solches wird auch bei der Erarbeitung von neueren Abgasnormen gefordert (bspw. bei der Projektskizze Particulate Measurement Program (PMP) der UNECE/GPPE). Ausserdem sollte eine Messvorrichtung möglichst kostengünstig und kompakt sein, damit sie in Messprüfständen von lokalen Strassenverkehrsämtern und Autogaragen etc. zur Anwendung kommen kann.

Den Weg hin zu einer Messmethode und Vorrichtung, die diesen Bedingungen gerecht werden, geht die Erfindung.

Messmethoden zum Ermitteln der Partikelzahl sind an sich bekannt. Es ergeben sich aberfolgende Probleme:

1. Verdünnung: Es kann niemals der ganze Abgasstrom vermessen werden, sondern es muss eine Probe entnehmbar sein, deren Schwebeteilchenkonzentration Aussagen über die emittierte Gesamt-Schwebeteilchenmenge erlaubt. Gemäss dem Stand der Technik ist dem Messsystem häufig ein sog. Vollstromverdünner vorgeschaltet: sämtliches Abgas wird dem Messstrang zugeführt; zusätzlich wird so viel Verdünnungsgas beigegeben, dass der Volumenstrom im Messstrang unabhängig von der Abgasmenge konstant ist. Auf diese Weise wird erreicht, dass die Konzentration von Schwebeteilchen im Messstrang proportional zur emittierten Gesamtpartikelmenge ist. Für eine Messung muss lediglich eine beliebig grosse Teilmenge aus dem Gas im Messstrang abgezweigt und die darin enthaltene Partikelkonzentration ermittelt werden. Die auf Vollstromverdünnung basierenden Messsysteme sind aber sehr aufwändig, gross und teuer, da ein sehr grosses Gasvolumen bewältigt werden muss (der Volumenstrom im Messstrang muss ja grösser sein als der maximale Abgasstrom, bspw. bei Volllast des Motors).

2. Flüchtige Schwebeteilchen: Bei den Schwebeteilchen handelt es sich um ein Gemisch von flüchtigen und festen Substanzen. Eine solche Situation liegt beispielsweise bei Dieselabgas vor; dabei bestehen die festen Staubteilchen vorwiegend aus Kohlenstoff, die flüchtigen Teilchen aus kondensierten Kohlenwasserstoffen und/oder Schwefelsäure und Wasser. In vielen Fällen ist es wünschenswert, die flüchtigen von den festen Schwebeteilchen zu trennen oder die flüchtigen Schwebeteilchen zu eliminieren. Beispielsweise tragen, wenn es um Atemwegerkrankungen geht, vorwiegend die festen Schwebeteilchen zur Schädlichkeit des Abgases bei. Ausserdem sind bei der Schädlichkeit von flüchtigen Schwebeteilchen - das Ausmass der Schädlichkeit ist Gegenstand von laufenden Untersuchungen-andere Messkriterien massgebend; deren Anzahl ist in erster Näherung nicht relevant, wohl aber deren Gesamtmasse.

Zur Elimination der flüchtigen Schwebeteilchen aus dem Messgas gibt es gemäss dem Stand derTechnik einige Ansätze:

Thermodesorber. Der Thermodesorber (oft auch als Thermodenuder bezeichnet) ist eine seit mehreren Jahren verwendete und von verschiedenen Anbietern (TSI/Topas; Dekati) kommerzialisierte Apparaturzur Entfernung flüchtiger Partikel aus einem Aerosol. Der Thermodesorber besteht aus einem beheizten Rohr, in dem das Aerosol auf eine definierte Temperaturgebracht und damitflüchtige Aerosolkomponenten verdampftwerden können; daran schliesst sich eine sogenannte Aktivkohlefalle an, in der das Aerosol-Dampf-Gemisch durch ein Rohr mit Drahtgitterwandungen geführt wird, ausserhalb dessen sich Aktivkohle (-Granulat) befindet. Dampfmoleküle der flüchtigen Aerosolkomponenten dringen aufgrund ihrer starken Diffusionsbewegung bis zu den Aktivkohlekörnern vor, wo sie adsorbiert und somit aus dem Aerosol entfernt werden. Die festen, nicht verdampften Aerosolpartikel folgen dem Gasstrom durch das Rohr mit den Gitterwandungen. Hinter der Aktivkohlefalle enthält das Aerosol aufgrund der Absorption durch die Aktivkohle nur noch so wenig Dämpfe, dass diese nicht oder in unerheblichem Masse auskondensieren. Die Entfernung flüchtiger Aerosolkomponenten hängt unter ungünstigen Umständen vom Sättigungsgrad der Aktivkohle ab.

Ejektor-Verdünner (Dekati): Die finnische Firma Dekati bietet sogenannte Ejektor-Verdünner an, bei denen das Roh-Aerosol durch eine Düse geführt und von einem schnellen Verdünnungsluftstrom mitgezogen wird. Nachteile des Ejektorverdünners sind der schmale Einstellbereich des Verdünnungsverhältnisses und dessen Abhängigkeit von den Druckverhältnissen.

3. Messschwierigkeiten bei kleinen Partikeln: Gängige Messmethoden haben ihre Grenzen beim Zählen von sehr kleinen Schwebeteilchen, die zahlenmässig besonders ins Gewicht fallen können.

Eine an sich gängige Methode zurZählung von Schwebeteilchen beruht auf der Lichtstreuung dieser Partikel beim Durchgang durch einen Lichtstrahl. Die Partikel werden dazu mittels einer Düse durch den kontinuierlichen Lichtstrahl hindurchgeblasen. Durch entsprechende Dimensionierung von Düsendurchmesser, Partikelkonzentration und Lichtstrahldurchmesser kann sichergestellt werden, dass sich jeweils nur ein einzelnes Partikel im Lichtstrahl befindet. Beim Durchgang durch den Lichtstrahl streut ein Partikel das Licht in Raumrichtungen ausserhalb der Strahlrichtung. Photodioden, die in diesen Raumrichtungen angeordnet sind, detektieren daher einen Anstieg der Lichtintensität während des Durchgangs des Partikels. Die Anzahl der so gemessenen Streulichtpulse ist damit gleich der Anzahl der Partikel, die in die Zähloptik eingedüst wurden.

Die Intensität des gestreuten Lichtes ist stark von der Grösse der Partikel abhängig. Unterhalb einer Partikelgrösse von 200-300 nm ist eine Bestimmung des Streulichtsignals sehr aufwendig oder praktisch nicht mehr möglich. Daher kommt die Methode der Teilchenzählung über Lichtstreuung häufig in Kombination mitsogenannten Kondensationskernzählern (CNC) in Anwendung: Da sich Partikel im Submikronbereich wegen der geringen Intensität des von ihnen gestreuten Lichtes einer Zählung mit optischen Methoden entziehen, werden sie im Kondensationskernzählerdurch Aufdampfen einer Flüssigkeit physikalisch "vergrössert" bis sie ein für eine Zählung ausreichendes Streulichtsignal liefern. Dazu wird das Submikron-Partikel-haltige Aerosol zunächst über den gesättigten Dampf der Flüssigkeit geleitet; anschliessend wird durch starke Abkühlung in einem Kondenser eine Übersättigung des Dampfes erzeugt, der daraufhin auf den verfügbaren Oberflächen kondensiert, u.a. auf den Partikeln. Der Durchmesser, den die auf den Partikeln kondensierenden Tröpfchen bis zum Ende des Kondensationsprozesses erreichen, ist weitgehend unabhängig von der ursprünglichen Grösse der Aerosolpartikel.

Häufig wird Butanol als aufgedampfte Flüssigkeit verwendet: Das partikelhaltige Gas strömt zunächst durch eine geheizte Strecke (35°C) über einem Butanolbad. Dabei wird das Gas mit Butanoldampf gesättigt. Anschliessend folgt ein gekühlter Teil (Kondensator, 10°C), wo der Dampf wegen der reduzierten Temperatur übersättigt wird und auf den Partikeln kondensiert. Die Partikel wachsen so zu Tropfen von typisch ungefähr 10 $\mu$m Durchmesser.

Allerdings funktioniert die Tröpfchenbildung erst oberhalb eines gewissen Mindestdurchmessers der eingeleiteten Aerosolpartikel. Die Übersättigung darf nur so gross sein, dass keine homogene Nukleation, das heisst Tropfenbildung ohne Kondensationskern, auftritt. Andererseits sollte die Übersättigung möglichst gross sein, damit auch sehr kleine Partikel wachsen können (Dampfdruckerhöhung bei kleinen Partikeln). Bei gegebener Übersättigung ist der minimale Durchmesser Dk durch die Kelvin-Gibbs-Gleichung bestimmt:

$$Dk = 4\ sigma\ M\ /\ (RT\ rho\ \ln(S))$$

(Dk: Kelvin-Durchmesser
sigma: Oberflächenspannung
M: molare Masse der Dampfmoleküle
rho: Dichte der Flüssigkeit
R: Gaskonstante
S: Übersättigung)

Die Gleichung gilt für Tropfen aus dem Material des Dampfes, also erst, wenn bereits mindestens eine Monolage Dampf auf dem Partikel adsorbiert ist. Die Bedingung, dass diese Monolage entsteht, ist von der Partikeloberfläche abhängig.

Für den Kondensationskernzähler (CNC) bedeutet dies:

1. Die Bedingungen zur Bildung der ersten Lage müssen verfüllt sein (abhängig von Partikelmaterial, Oberflächenstruktur).

2. Damit das Partikel weiterwachsen kann, muss die kritische Übersättigung erreicht sein beziehungsweise D > Dk.

Neben diesen Phänomenen können auch noch Diffusionsverluste im CNC die Messung von sehr kleinen Partikeln stören.

Typische untere Grenzen für die Partikelgrösse liegen bei 20 nm oder noch kleiner. Es gibt heute bereits Modelle, die bei 3 nm noch 50 % Effizienz aufweisen. Die Endgrösse der im CNC entstehenden Tropfen ist weitgehend unabhängig von der Partikelgrösse.

Bei der Messung von Partikeln aus Motor- und Fahrzeugemissionen kann es - bspw. wegen Kondensatbildung bei der Probenentnahme - vorkommen, dass ein nicht unerheblicher Anteil der Partikel sich in der Nähe dieser Durchmesser-bezogenen Empfindlichkeitsschwelle des Kondensationskernzählers befindet. Das Messergebnis hängt dann stark von der momentanen und normalerweise nicht stabilen Grössenverteilung der Partikel ab und ist somit nicht mehr verlässlich.

US 6 439 027 B1 offenbart ein Konzept zum Charakterisieren von Schwebeteilchen in einem Abgas, bei dem einem in einem Schornstein befindlichen Partikelzähler verdünntes Rohgas zugeführt wird.

Gemäss der Erfindung geht es um ein Verfahren und eine Vorrichtung, welche eine Verdünnung des zu charakterisierenden Aerosols und/oder die Bereitstellung eines Messgases ermöglichen, dessen Konzentration an Schwebeteilchen charakteristisch ist für die emittierte Gesamt-Schwebeteilchenmenge.

Wenn man vom erwähnt aufwändigen Prinzip der Vollstromverdünnung Abstand nehmen möchte, muss vom für die Messung entnommenen Probevolumen auf das gesamte von der Anlage emittierte Abgasvolumen hochgerechnet werden. Dies erfordert eine Messung der Volumenströme sowohl im Messstrang als auch im Hauptabgasstrang, sowie deren Berücksichtigung bei der Datenermittlung oder -auswertung.

Handelt es sich beim Abgasstrom um einen konstanten Volumenstrom, so kann sich die Datenauswertung auf die Multiplikation der Messdaten mit einem Proportionalftätsfaktor beschränken. In bestimmten Fällen ist jedoch der Abgasvolumenstrom starken zeitlichen Schwankungen unterworfen, etwa bei der Messung von Fahrzeugemissionen während eines Fahrzyklus auf dem Rollenprüfstand. Für eine korrekte Datenauswertung müssen dann zusätzliche zeitkritische Einflussgrössen berücksichtigt werden, etwa

- der Zeitversatz zwischen der Volumenstrommessung im Abgasstrang und dem Eintreffen der entsprechenden Partikelwolke im Messinstrument,

- die diffusionsbedingte Verschmierung der (Flanken der) Partikelwolke auf dem Transportweg zum Messinstrument,

- das Ansprechverhalten des im Instrument realisierten Messprinzips auf eine sich schnell ändernde Partikelkonzentration.

Diesen Anforderungen wird die Erfindung gerecht:

Der Messwert der Volumenstrommessung im Rohgaskanal (dem Hauptstrang) wird verwendet, um das Verdünnungsverhältnis in einer Verdünnungseinheit zeitlich zu variieren. Durch die Verdünnungseinheit wird Rohgas aus dem Rohgaskanal dosiert in einen Messgaskanal transferiert, wobei der Transfer so geregelt wird, dass die pro Zeiteinheit transferierte Rohgasmenge abhängig vom Volumenstrom im Rohgaskanal und desto grösser ist, je grösser der Volumenstrom im Rohgaskanal ist

Demnach kann die Verdünnungseinheit so eingestellt werden, dass bei hohem Abgasvolumenstrom eine kleine Verdünnung erfolgt, bei niedrigem Abgasvolumenstrom hingegen eine hohe Verdünnung; sinkt der Abgasvolumenstrom auf Null, so wird das Verdünnungsverhältnis unendlich, d.h. den Messinstrumenten wird nur partikelfreies Verdünnungsgas zugeführt.

Eine Messung der Volumenströme von Abgas (Rohgaskanal=Hauptstrang) und Messgas (Messgaskanal=Nebenstrang) kann durch verschiedene bekannte Messprinzipien realisiert werden, so dass die Verfügbarkeit der daraus erhältlichen Messdaten vorausgesetzt werden kann.

Gemäss einer besonders bevorzugten Ausführungsform wird die Regelung so gewählt sein, dass der aus der Verdünnungseinheit austretende Partikelstrom in seinem zeitlichen Verlauf dem Partikelstrom im Abgasstrang genau proportional ist (eventuell bis auf einen geringfügigen, durch den räumlichen Abstand von Volumenstrommessung und Verdünnungseinheit bedingten Zeitversatz; dieser lässt sich bspw. elektronisch korrigieren). Damit ist sichergestellt, dass die der Verdünnungseinheit nachgeschalteten Messinstrumente einen zeitlichen Verlauf der Partikelkonzentration messen, der genau dem Partikelstrom durch den Abgashauptstrang entspricht.

Eine auf bereits realisierter Technologie beruhende Ausführungsform der Verdünnungseinheit ist ein sogenannter Rotationsverdünner (oder Karussellverdünner), bei dem eine mit Kavitäten versehene Scheibe kleine Rohgasvolumina in das partikelfreie Verdünnungsgas überführt (Ein solcher Rotationsverdünner - Typ MD19-2E - ist erhältlich bei der Patentanmelderin, der Matter Engineering AG; entsprechende Informationen findet man in Ch. Hueglin, L. Scherrer und H. Burtscher, J. Aerosol Sci. 28, p.1049 (1997) oder direkt beim Hersteller). Je langsamer die Scheibe rotiert, desto weniger Rohgas gelangt in den Verdünnungsstrom, und desto höher ist das Verdünnungsverhältnis. Die Rotationsfrequenz wird aus einem benutzerseitigen Vorgabewert und bspw. dem Verdünnungsgasstrom ermittelt, sodass bei gleichem Vorgabewert und einem sich verändernden Messgasstrom - etwa durch das Zuschalten eines weiteren Messinstrumentes - das Verdünnungsverhältnis durch Anlassung der Rotationsfrequenz konstant bleibt.

Das oben beschriebene Steuerprinzip für die Rotationsfrequenz der Scheibe wird nun so erweitert, dass auch der im Abgasstrang gemessene Volumenstrom in die Berechnung der Rotationsfrequenz eingeht. Beispielsweise wird bei ruhendem Abgas (entsprechend "Motor aus") ein Volumenstrom von Null gemessen; der Voreinstellwert für die Rotationsfrequenz wird mit dem Volumenstromwert (in diesem Falle Null) multipliziert, sodass bei stehendem Abgas nun auch die Scheibe nicht rotiert.

Gemäss Ausführungsformen der Erfindung sowie gemäss einem vorliegend nicht beanspruchten weiteren Aspekt werden ein Verfahren und eine Vorrichtung zur Verfügung gestellt, welche ebenfalls einen Schritt auf dem Weg hin zu einer teilchenanzahlempfindlichen, vergleichsweise kompakten Charakterisierungsvorrichtung für Aerosole gehen. Es wird bei Kondensationskernzählern (CNC) angesetzt, bei welchen sich die vorstehend geschilderten Probleme mit Teilchen nahe an der oder unter der kritischen Grösse ergeben.

Unterschreiten die in den Kondensationskernzähler eingeleiteten Aerosolpartikel eine gewisse Mindestgrösse, so kann der Kondensationsprozess beim gegebenen Übersättigungsgrad des Dampfes nicht oder nur sehr langsam einsetzen. Die an solch kleinen Aerosolpartikeln kondensierten Tröpfchen haben folglich einen deutlich geringeren Durchmesser als die auf grösseren Ausgangspartikeln kondensierten.

Bei der üblichen Betriebsart von Kondensationskernzählern wird festgestellt. ob ein von der Zähloptik festgestellter Streulichtblitz eine gewisse Mindestintensität aufweist, um ihn als Signal eines Partikels bei der Auswertung zu berücksichtigen. Damit misst der CNC die Partikelkonzentration, liefert aber selbst keine Grösseninformation. Diese muss bei Bedarf durch Kombination mit einem Beweglichkeitanalysator oder einer Diffusionsbatterie erhalten werden.

Gemäss diesen Ausführungsformen der Erfindung sowie gemäss dem vorliegend nicht beanspruchten weiteren Aspekt wird, über die einfache Diskriminierung hinausgehehend, zudem die Intensität des Streulichtpulses so empfindlich erfasst, dass die Häufigkeitsverteilung der Intensitäten ermittelt werden kann.

Damit macht sich dieser Aspekt der Erfindung die Eigenschaft zunutze, dass in der Zähloptik kleine Tröpfchen Streusignale von erheblich verminderter Intensität erzeugen. Auftreten von Lichtpulsen niedriger Intensität deutet also auf das Vorkommen kleiner Partikel im Aerosol hin. "Klein" bedeutet hier "in der Nähe der Durchmesser-bezogenen Detektionsschwelle des Instrumentes".

Übersteigt die relative Häufigkeit"kleiner" Lichtpulse ein gewisses Mass, weist dies auf bedeutende Partikelzahlen im Bereich der Detektionsschwelle hin, so dass nicht mehr von einer verlässlichen Messung der Gesamtpartikelzahl ausgegangen werden kann.

Dieses Verfahren ist von anderen Parametern der Partikelmessung unabhängig und kann daher als zusätzliches Kriterium zur Validierung des Ergebnisses eingesetzt werden.

Im Folgenden werden Ausführungsbeispiele der Erfindung anhand von Zeichnungen im Detail beschrieben. In den Zeichnungen zeigen:

- die Figuren 1a und 1b je ein Schema von Ausführungsformen des Verfahrens zum Abtrennen von flüchtigen Schwebeteilchen, welches auf einer Heizstrecke und einer Verdünnungseinheit beruht,

- die Figur 2 ein Schema einer Ausführungsform,

- die Figur 3 ein Schema einer erfindungsgemässen Anordnung zum Bereitstellen von Messgas, welches frei von flüchtigen Schwebeteilchen ist und dessen Konzentration an festen Schwebeteilchen proportional zur Schwebeteilchenmenge in einem Rohgaskanal ist,

- die Figur 4 ein Schema einer Ausführungsform des weiteren Aspektes der Erfindung,

- die Figuren 5a und 5b fiktive Häufigkeitsverteilungen von Streulichpulsen in Funktion von deren Intensität.

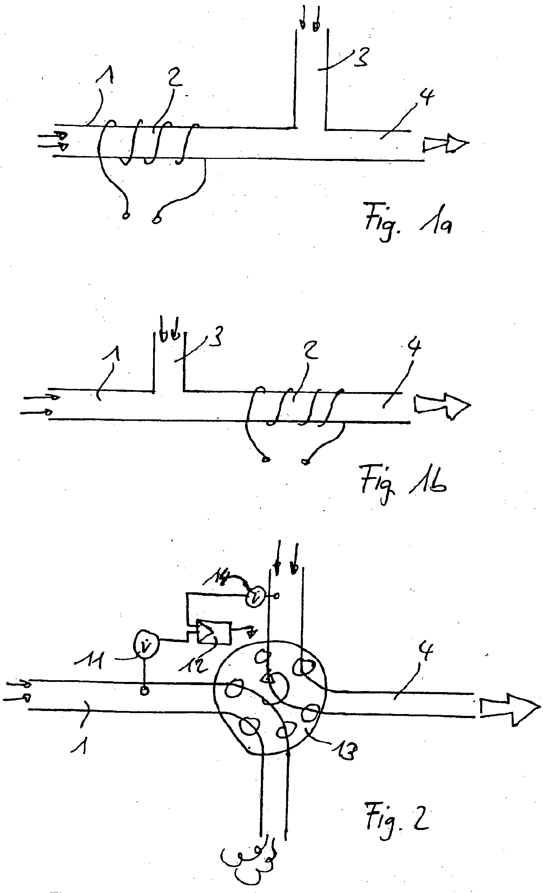

Die Ausführungsformen gemäss **Figuren 1a und 1b** beruhen (nicht gemäss der beanspruchten Erfindung) auf dem Prinzip der Vollstromverdünnung: sämtliches vom Rohgaskanal einströmende Gas.wird dem Messgaskanal zugeführt. Eine Verdünnungseinheit besteht in diesen Fällen also lediglich aus einer Beifügung von Verdünnungsgas zum Rohgas, wobei das Verdünnungsgas vorzugsweise im Wesentlichen frei von Schwebeteilchen ist.

Gemäss Figur 1a wird das in den Rohgaskanal 1 einströmende, Schwebeteilchen enthaltende Gas auf einer Heizstrecke 2 so stark aufgeheizt, dass die flüchtigen Schwebeteilchen verdampfen. Bei Verbrennungsabgasen beträgt die dafür notwendige Temperatur üblicherweise mindestens ca. 180°C oder mindestens 200°C. Die maximale Temperatur ist abhängig von verwendeten Rohrmaterialien und beträgt bspw. ca. 400°C, da bei höheren Temperaturen katalytische Effekte auf Metalloberflächen eintreten und Messergebnisse verfälschen können. Bevorzugte Temperaturen sind bspw. ca. 190°C bis 350°C, besonders bevorzugt ist der Bereich zwischen 200°C und 300°C. Auf der Heizstrecke 2 vorhandene Heizungsmittel können eine Rohrheizung aufweisen, aber auch andere Heizungsmittel sind denkbar, bspw. im Gaskanal verlaufende Heizfäden.

Über einen Verdünnungsgaskanal 3 wird Verdünnungsgas zugeführt. Der Verdünnungsgaskanal mündet an einer Stelle in den Rohgaskanal, an welcher die in diesem befindlichen Verbrennungsabgase noch voll aufgeheizt sind, also sich bspw. immer noch im Temperaturbereich zwischen 180°C oder 200°C und 400°C befinden. Die Verdünnung bewirkt, dass die flüchtigen, verdampften Aerosole im Messgaskanal 4 nicht wieder auskondensieren.

Die Anordnung gemäss Figur 1b unterscheidet sich von derjenigen gemäss Figur 1a dadurch, dass der Verdünnungsgaskanal 3 in Strömungsrichtung vor der Heizstrecke 2 angeordnet ist.

Die - nur sehr schematisch gezeichneten - Anordnungen gemäss den Figuren 1a und 1b können auf verschiedene Arten eingesetzt oder abgeändert werden:

- Beispielsweise muss das in den Rohgaskanal 1 eingeleitete Gas nicht das gesamte bspw. als Verbrennungsabgas erhaltene Rohgas sein; vielmehr kann auch nur ein Teil dieses Gases verwendet werden.

- Die in den Verdünnungsgaskanal 3 eingeleitete Gasmenge kann geregelt sein, bspw. so, dass die im Messgaskanal 4 fliessende Gasmenge immer konstant ist.

- Abweichend vom Prinzip der Vollstromverdünnung kann auch nur ein Teil des Rohgases zusammen mit Verdünnungsgas einem Messgaskanal zugeführt werden. Dazu folgt weiter unten noch ein Beispiel, dort in Kombination mit dem zweiten Aspekt der Erfindung.

Eine Ausführungsform (nicht gemäß der beanspruchten Erfindung) in der Figur 2 gezeigt. Volumenstrommessungsmittel, bspw. eine erste Messsonde 11, ermitteln den im Rohgaskanal 1 vorhandenen Volumenstrom. Die Messresultate werden einem Regler 12 zugeführt. Dieser regelt eine Verdünnungseinheit, bspw. einen an sich bekannten Karussellverdünner 13. Die Verdünnungseinheit ist so angeordnet und ausgebildet, dass dem Messgaskanal 4 nur ein Teil des Rohgases (bspw. Abgases) zugeführt wird. Die Regelung erfolgt so, dass die Menge des dem Messgaskanal 4 pro Zeiteinheit zugeführten Rohgases desto grösser ist, je grösser der Volumenstrom im Rohgaskanal ist. Gemäss einer bevorzugten Ausführungsform ist die dem Messgaskanal 4 zugeführte Rohgasmenge proportional zum Volumenstrom. Der Volumenstrom des in den Messgaskanal 4 einströmende Verdünnungsgas kann durch geeignete Mittel (präzise Pumpen, Drosseln) konstant gehalten werden. Alternativ oder ergänzend dazu können auch im Messgaskanal Volumenstrommessungsmittel, bspw. eine zweite Messsonde 14 vorhanden sein, wobei dann die dem Messgaskanal zugeführte Rohgasmenge bspw. so geregelt wird, dass sie auch proportional zum Volumenstrom des Verdünnungsgases ist.

Die Messung von Volumenströmen kann in an sich bekannter Art erfolgen, bspw. mit einem Heissdraht-Flowmeter, durch Messung des Druckabfalls über einem Venturi-Rohr, mit einem Turbinen-Strömungsmesser etc. Es kann aber auch vorgesehen sein, dass bereits an sich bekannte Daten über den Volumenstrom des Rohgases aufbereitet werden. Bspw. lassen sich sehr präzise Daten über den Volumenstrom aus den in der Motorelektronik moderner Verbrennungsmotoren vorhandenen Daten ermitteln, zum Beispiel aus der Drehzahl und dem Ladedruck eines Turboladers. In diesem letzteren Fall bestehen die Mittel zum Ermitteln des Volumenstromes im Rohgaskanal lediglich aus elektronischen Kommunikationsmitteln, welche mit der Motorelektronik in Verbindung stehen und diesem Volumenstromdaten entnehmen können.

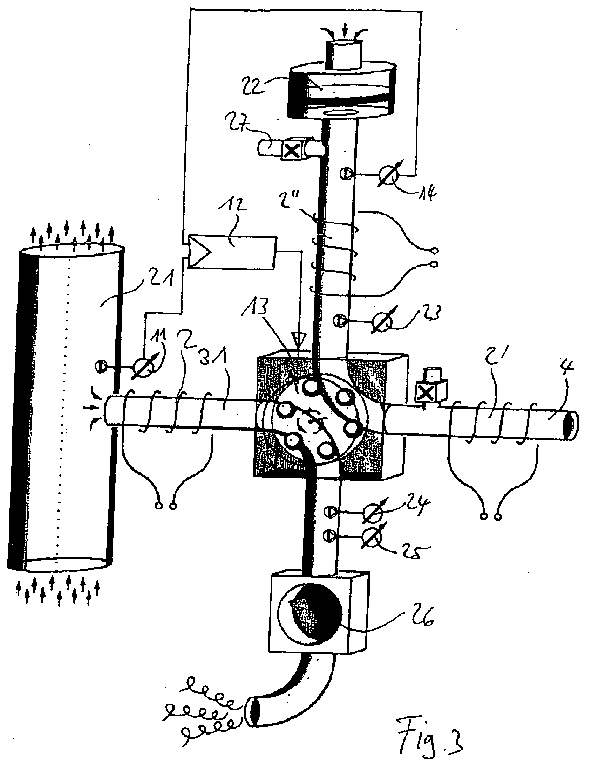

In der Figur 3 ist eine Anordnung gemäß der Erfindung gezeichnet, die zum Bereitstellen von Messgas dient, welches frei von flüchtigen Schwebeteilchen ist und dessen Konzentration an festen Schwebeteilchen proportional zur Schwebeteilchenmenge in einem Rohgaskanal ist. Die Anordnung kombiniert das Prinzip der Erfindung mit dem vorstehend aufgezeigten Prinzip der Kombination einer Heizstrecke und einer Verdünnungseinheit zum Abtrennen von flüchtigen Schwebeteilchen.

Aus einem Rohgaskanal 21 wird über einen Sekundär-Rohgaskanal 31 mit Hilfe einer Pumpe 26 Rohgas abgezweigt. Auf einer ersten Heizstrecke 2 wird dieses aufgeheizt und anschliessend verdünnt. Die Verdünnung erfolgt hier über einen Karussellverdünner 13 in einen Messgaskanal, in welchen - in der Figur in den oberen Arm des Kanals Verdünnungsgas einströmt. Ein Partikelfilter 22 kann vorgeschaltet sein, um sicherzustellen, dass das Verdünnungsgas schwebepartikelfrei ist. In der gezeichneten Anordnung ist dem Karusselverdünner 13 eine zweite Heizstrecke 2' nachgeschaltet. Die erste und die zweite Heizstrecke 2, 2' können bspw. so zusammenwirken, dass die gewünschte Temperatur für die Verflüchtigung (bspw. zwischen 180°C und 400°C) erst in bzw. nach der zweiten Heizstrecke 2' erreichtwird, die erste Heizstrecke also mithin als Vorheizstufe dient, um bspw. zu verhindern, dass die Temperatur des Rohgases beim Eintritt in den Sekundär-Rohgaskanal 31 unter den Taupunkt fällt, wodurch neue, im Rohgaskanal 21 noch nichtvorhandeneflüchtige Partikel entstehen würden. Eine Verdünnungsgas-Vorheizstrecke 2" kann bspw. dazu dienen, das Verdünnungsgas auf etwa dieselbe Temperaturwie das Rohgas vorzuheizen. Die Temperatur des Rohgases und des Verdünnungsgases vor der zweiten Heizstrecke 2' beträgt bspw. zwischen 70°C und 160°C.

Im Rohgaskanal 21 ist eine erste Messsonde 11 zum Ermitteln des Volumenstromes vorhanden. Der Regler 12 regelt die Zuführung von Rohgas in den Messgaskanal 4 bspw. so, dass die dem Messgaskanal 4 pro Zeiteinheit zugeführte Menge Rohgas proportional zum Volumenstrom im Rohgaskanal 21 und je nach dem auch zum Verdünnungsgas-Volumenstrom im Messgaskanal ist; letzerer wird durch eine zweite Messsonde 14 ermittelt. Weitere Messsonden 23, 24, 25 dienen der Temperatur- und Druckermittlung der Gase im Mess- und im Sekundär-Rohgaskanal; die mit diesen Sonden ermittelterm Werte können ebenfalls in die durch den Regler 12 bewirkte Regelung eingehen (nicht gezeichnet).

Im gezeichneten Beispiel ist die erste Messsonde 11 in Strömungsrichtung nach der Abzweigung des Sekundär-Rohgaskanales 31 im Rohgaskanal 21 angebracht. Die in den Sekundär-Rohgaskanal abgezweigte Menge Rohgas ist in vielen Fällen unerheblich und kann vernachlässigt werden. Es kann aber auch eine entsprechende Korrektur vorgenommen werden, bspw. wird die Pumpe 26 oft ein genau bekanntes Volumen pro Zeiteinheit fördern; auch Druck- und Temperaturmessungen mit Messsonden 24, 25 können hierzu Informationen liefern. Alternativ dazu kann die erste Messsonde 11 vor der Abzweigung des Sekundär-Rohgaskanales angebracht

In der Zeichnung ist noch ein Stutzen 27 zum Einführen eines Eichaerosols dargestellt. Damit können im Messgaskanal 4 vorhandene oder diesem nachgeschaltete Messsysteme kalibriert werden.

Als Verdünnungsgas kann - wie in allen anderen Ausführungsformen - irgend ein Gas benutzt werden. Vorzugsweise sollte es im Wesentlichen keine Schwebeteilchen aufweisen, d.h. die Schwebeteilchenkonzentration sollte viel niedriger sein als die des Rohgases. Häufig wird es zweckmässig sein, gefilterte Luft als Verdünnungsgas zu verwenden.

Anschliessend an den Messgaskanal können Messeinheiten zur Charakterisierung des im Messgaskanal vorhandenen Aerosols anschliessen. Diese können auf verschiedenen physikalischen Prinzipien beruhen und physikalische und chemische Eigenschaften der Schwebeteilchen charakterisieren. Beispielsweise können Lichtstreuung an den Teilchen, die auf die Teilchen diffundierte elektrische Ladung, die photoelektrische Ausbeute, die Beweglichkeit etc. oder auch die Teilchenmasse analysiert werden. Es können mehrere verschiedene Messeinheiten parallel geschaltet oder unter Umständen auch in Serie hintereinander angeordnet werden; eine Kombination von verschiedenen physikalischen Prinzipien erhöht die Aussagekraft der Messungen. Ein besonders bevorzugtes Beispiel für eine Messeinheit, welche anschliessend an den Messgaskanal angeordnet werden kann, ist ein weiter unten noch beschriebener Kondensationskernzähler gemäss dem dritten Aspekt der Erfindung:

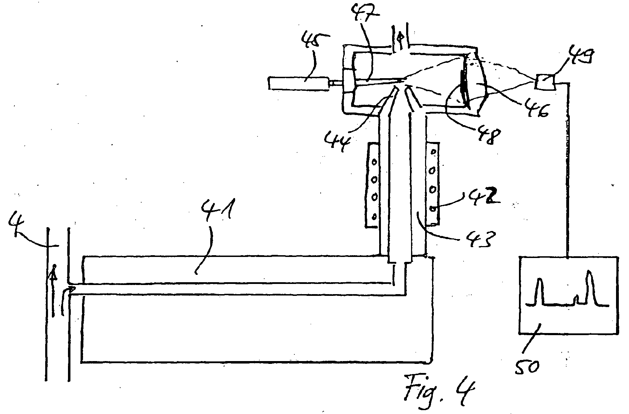

Im folgenden wird eine Ausführungsform des weiteren Aspekts der Erfindung beschrieben. In der Figur 4 ist dazu schematisch ein Kondensationskernzähler zum Zählen von Schwebeteilchen abgebildet. Kondensationskernzähler sind an sich bekannt; daher sollen die apparativen Details und die Funktionsweise des Kondentsationskernzählers hier nur summarisch beschrieben werden. Es versteht sich, dass der weitere Aspekt der Erfindung mit jedem bekannten oder neuen Kondensationskemzähler-Aufbau kombiniert werden kann. Eine bestimmte, im allgemeinen kleine (bspw. ungefähr 11/min) Menge Messgas wird aus dem Messgaskanal 4 abgezweigt (dafür vorhandene eventuelle Pumpen, Drosseln, Regelungsmittel etc. sind hier nicht dargestellt.) Das Messgas wird durch einen geheizten Sättiger 41 (Temperatur bspw. ungefähr 35°C) gelenkt; in diesem kommt es bspw. in Kontakt mit einem Butanol-getränkten Schwamm (natürlich sind anstelle von Butanol auch andere flüchtige Substanzen denkbar). Anschliessend wird es durch einen mit Kühlmitteln 42 versehenen Kondenser 43 (Temperatur: beispielsweise ca. 10°C) geleitet, wo das bei den dort herrschenden Temperaturen in Übersättigung vorhandene Butanol an der Oberfläche der Schwebeteilchen auskondensiert. Aufgrund der eingangs geschilderten Beschränkungen ist das aber nur für Schwebeteilchen mit einem gewissen Minimalradius in ausreichendem Masse der Fall. Anschliessend an den Kondenser 43 gelangt das Messgas durch eine Austrittsdüse 44 in eine Messkammer, in welcher ein von einer Lichtquelle 45 - typischerweise einer Laserdiode - erzeugter Lichtstrahl 47 auf ein unmittelbar hinter der Austrittsöffnung der Austrittsdüse 44 liegendes Messvolumen fokussiert wird. An Butanoltröpfchen (mit einem Schwebeteilchen als Kondensationskern) gestreutes Licht gelangt via Fokussierrnittel 46 auf einen Photodetektor 49; ungestreutes Licht wird durch eine Blende 48 absorbiert. Vom Photodetektor erzeugte Lichtpulse gelangen in eine Auswerteeinheit 50.

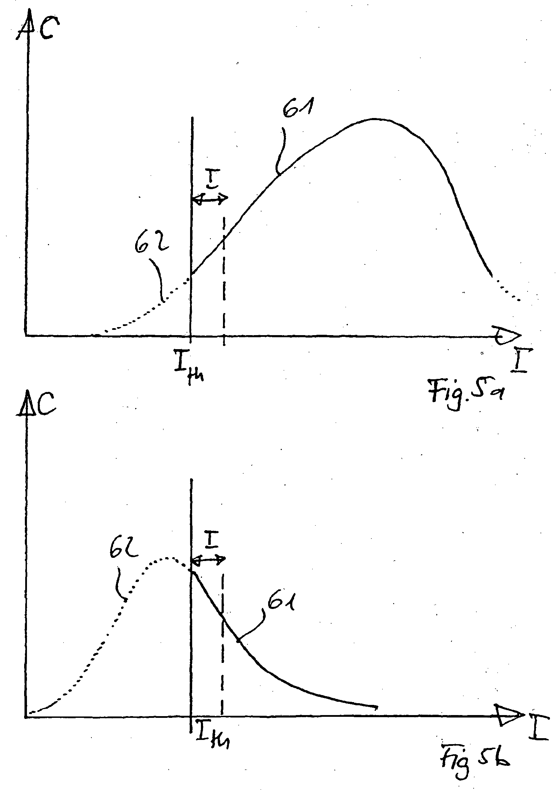

Gemäss dem weiteren Aspekt erfolgt in der Auswerteeinheit 50 - sie kann Mittel zur analog- und/oder digital-elektronischen Verstärkung, Aufbereitung und/oder Wandlung von Signalen sowie elektronische Datenverarbeitungsmittel umfassen - eine Auswertung nach Streulichtintensitäten. Es wurde nämlich festgestellt, dass eine solche Auswertung Hinweise auf die Verlässlichkeit der Messung bringt. Zur Illustration sind in den **Figuren 5a und 5b** zwei Diagramme dargestellt, die für verschiedene Situationen die Häufigkeit (C) der während einer gewissen Messdauer ermittelten Messpulse in Funktion der Pulsstärke (I) darstellen (Die Diagramme sind also eigentlich Histogramme). Die Pulsstärke I ist abhängig von der Teilchengrösse. Sehr kleine Pulsstärken entsprechen Teilchen, auf deren Oberfläche sich nicht genug Kondensat anlagern konnte.

In beiden Diagrammen stellt $I_{th}$ die Schwellenintensität dar, unter welcher keine oder keine verlässlichen Messresultate mehr ermittelt werden können. Mit 61 ist die gemessene Kurve bezeichnet, mit 62 die Häufigkeitsverteilung im nicht mehr messbaren Bereich unter der Schwellenintensität, die in der Praxis also nicht zugänglich ist. Pulse, deren Intensität unter der Schwellenintensität liegt, werden bei einer Zählung nicht erfasst.

Die Figur 5a stellt den Normalfall dar. Aus dem Verlauf der gemessenen Häufigkeitsverteilung 61 kann mit recht grosser Zuverlässigkeit geschlossen werden, dass die Häufigkeit der nicht messbaren Pulse (dargestellt durch die gepunktete Linie 62) klein ist. In einem Fall wie in Fig. 5b, wo die gemessene Häufigkeitsverteilung 61 von grossen Intensitäten herkommend gegen $1_{th}$ hin nicht wesentlich abfällt oder gar ansteigt ist das nicht der Fall. Hier muss mit einer grossen Häufigkeit im nicht messbaren Bereich gerechnet werden. Dementsprechend kann ein Messresultat, welches nur die im messbaren Bereich liegenden Pulse (wie in Fig. 5b) zählt, nicht verwendet werden. Es ist zu verwerfen.

Feste Schwebeteilchen in Abgasen von Verbrennungsmotoren sind eigentlich immer relativ 'gross', d.h. deren Grösse ist kaum je unter der Detektionsschwelle von modernen Kondensationskernzählern. Der Grund dafür ist, dass im Brennraum eine sehr hohe Konzentration von festen Schwebeteilchen herrscht, wodurch zwingend eine Koagulation zu grösseren Konglomeraten stattfindet. (Anders liegt der Fall bspw. bei Gasturbinen). Aus diesem Grund hat eine hohe Konzentration an 'kleinen' Schwebeteilchen häufig eine der zwei folgenden Bedeutungen:

a. Es sind noch flüchtige Schwebeteilchen vorhanden. Wenn der hier diskutierte weitere Aspekt der Erfindung mit einer vorgeschalteten Heizstrecke und Verdünnungseinheit kombiniert wurde, heisst das im Allgemeinen, dass eine Fehlfunktion vorliegt, bspw. dass die Heizstrecke nicht genügend beheizt ist.

b. Es sind 'ungewöhnliche' feste Schwebeteilchen vorhanden, die mit anderen Messmethoden weiter untersucht werden müssen. Solche können bspw. durch Additive im Treibstoff bewirkt werden, bspw. die manchmal verwendeten Cer-Additive.

Die Unterscheidung, ob ein Messresultat brauchbar ist oder verworfen werden muss kann anhand der Häufigkeitsverteilung (in Funktion der Pulsstärke) auf verschiedene Arten gemacht werden. Beispielsweise kann die Häufigkeit von Pulsen, die in einem bestimmten, über dem Schwellenwert liegenden Intensitätsintervall I gemessen werden ermittelt und in Relation zur gemessenen Gesamtintensität gesetzt werden. Wenn der im Intensitätsintervall I gemessene Anteil von Pulsen einen gewissen, einstellbaren Prozentsatz überschreitet, wird die Messung verworfen. Alternativ dazu kann auch die Steigung der C(I)-Kurve in der Nähe von $I_{th}$ bestimmt werden und die Messung bspw. verworfen werden, wenn sie negativ ist, oder es kann das Maximum der C(I)-Kurve mit dem Wert bei $I_{th}$ verglichen werden etc.

Die Vorrichtung gemäss diesem weiteren Aspekt der Erfindung enthält demnach Mittel zur elektronischen Analyse der Häufigkeitsverteilung, so, dass aufgrund der Häufigkeitsverteilung Rückschlüsse auf die Häufigkeit von Teilchen unter der einer gewissen Schwellengrösse gemacht werden können.

Zusammenfassend können flüchtige Schwebeteilchen eliminiert werden, indem in einem ersten Schritt das Aerosol auf eine Temperatur aufgeheizt wird, bei welcher die flüchtigen Schwebeteilchen verdampfen und in einem zweiten Schritt das Aerosol mit einem Verdünnungsgas verdünnt wird. Die Reihenfolge des ersten und des zweiten Schrittes kann vertauscht werden. Gemäss der Erfindung findet eine Verdünnung des Rohgases so statt, dass Rohgas einem mit Messgas durchflossenen Messgaskanal zugeführt wird, wobei die pro Zeiteinheit transferierte Menge Rohgas abhängig ist vom Volumenstrom im Rohgaskanal. Gemäss einem Ausführungsformen und einem weiteren Aspekt der Erfindung wird in einem Kondensationskernzähler nicht nur die Anzahl gemessener Streulichtpulse sondern auch deren Intensität ausgewertet, um Aussagen über die Verlässlichkeit der Messung machen zu können.

Einheiten zur Realisierung der Erfindung sowie des Prinzips der Kombination einer Heizstrecke und einer Verdünnungseinheit zum Abtrennen von flüchtigen Schwebeteilchen und des weiteren Aspekts können miteinander kombiniert werden, was vorteilhafte Ergebnisse bringt Solche Einheiten können aber auch, alternativ oder ergänzend, mit weiteren Verfahren und Vorrichtungen zum Charakterisieren, Trennen oder Eliminieren von Aerosolen - gemäss dem Stand der Technik oder neu entwickelt - kombiniert werden.

**Patentansprüche**

1.   Verfahren zum Charakterisieren eines Aerosols, wobei in einem Rohgaskanal (21) mit zu charakterisierendem Aerosol ein zeitlich nicht konstanter Volumenstrom vorhanden ist und wobei ein Messgaskanal (4) zum Zuführen von Messgas zu mindestens einer Messeinheit vorhanden ist', aufweisend die folgenden Verfahrensschritte:

- Abzweigen eines Teilstroms des Rohgases aus dem Rohgaskanal über einen vom Rohgaskanal abzweigenden Sekundär-Rohgaskanal (31) mittels einer Pumpe (26) und Aufheizen des Teilstroms auf einer ersten Heizstrecke (2),
- Durchfließen des Messgaskanals (4) mit einem Verdünnungsgas,
- Ermitteln des Volumenstroms im Rohgaskanal (21)
- Transfer von Rohgas über einen Karussellverdünner (13) aus dem Sekundär-Rohgaskanal (31) in den vom Verdünnungsgas durchflossenen Messgaskanal, wobei der Transfer so geregelt wird, dass die pro Zeiteinheit transferierte Rohgasmenge abhängig vom Volumenstrom im Rohgaskanal (21) und desto größer ist, je größer der Volumenstrom im Rohgaskanal ist, derart, dass die Konzentration der Schwebeteilchen im Messgaskanal charakteristisch ist für einen Gesamt-Schwebeteilchendurchsatz im Rohgaskanal, und
- Durchführen einer Messung von Schwebeteilchen im verdünnten Aerosol im Messgaskanal mit der Messeinheit.

2.   Verfahren nach Anspruch 1, **dadurch gekennzeichnet, dass** die pro Zeiteinheit transferierte Rohgasmenge, bis auf einen möglichen Zeitversatz proportional zum Volumenstrom im Rohgaskanal (21) ist.

3.   Verfahren nach einem der vorangehenden Ansprüche, wobei das zu charakterisierende Aerosol vor und/oder nach dem Transfer in den Messgaskanal auf einer Heizstrecke auf eine Temperatur aufgeheizt wird, bei welcher im Aerosol enthaltene flüchtige Schwebeteilchen verdampfen.

4.   Verfahren nach Anspruch 3, **dadurch gekennzeichnet, dass** das Aerosol auf eine Temperatur von mindestens 180°C und vorzugsweise zwischen

**5.** Verfahren nach Anspruch 3 oder 4, wobei das zu charakterisierende Aerosol vor dem Transfer in den Messgaskanal auf einer Heizstrecke aufgeheizt wird, **dadurch gekennzeichnet, dass** der Transfer von Rohgas aus dem Rohgaskanal (1, 21) in den vom Verdünnungsgas durchflossenen Messgaskanal so eingestellt wird, dass bei einer nachfolgenden Abkühlung auf eine ursprüngliche Temperatur des Aerosols die flüchtigen Substanzen nicht mehr auskondensieren.

**6.** Verfahren nach einem der vorangehenden Ansprüche, **dadurch gekennzeichnet, dass** mindestens ein Teil des Aerosols im Messgaskanal mit dem Dampf einer flüchtigen Substanz in Übersättigung versehen wird, wodurch die flüchtige Substanz an der Oberfläche von Schwebeteilchen auskondensiert und dadurch Tröpfchen entstehen, dass anschließend die Tröpfchen durch einen Lichtstrahl gelenkt werden und dadurch einen Streulichtimpuls verursachen, welcher zum Zählen der Tröpfchen detektiert wird, und dass eine Streulichtpulsintensität detektiert und ausgewertet wird.

**7.** Verfahren nach Anspruch 6, **dadurch gekennzeichnet, dass** der Teil von Streulichtpulsen mit niedrigen Intensitäten nahe einer Streulicht-Pulsdetektionsschwelle an der Menge aller detektierten Streulichtpulse ermittelt wird.

**8.** Vorrichtung zum Durchführen des Verfahrens nach einem der Ansprüche 1 bis 7, aufweisend einen Rohgaskanal (21) mit einem Aerosol-Einlass, einen vom Rohgaskanal abzweigenden Sekundär-Rohgaskanal (31), eine Pumpe zum Abzweigen von Rohgas aus dem Rohgaskanal in den Sekundär-Rohgaskanal (31), eine erste Heizstrecke (2) zum Aufheizen des abgezweigten Rohgases, einen Messgaskanal mit einem Verdünnungsgäseinlass sowie mit einem Karussellverdünner (13) als Transfermittel zum dosierten Transfer von Aerosol aus dem Rohgaskanal in den Messgaskanal und eine Messeinheit zur Messung von Schwebeteilchen in verdünntem Aerosol im Messgaskanal, Mittel zum Bestimmen des Volumenstroms im Rohgaskanal und einen Regler (12) zum Regeln des Transfers von Rohgas aus dem Sekundär-Rohgaskanal in den Messgaskanal, wobei der Regler so ausgebildet ist und so mit den Transfermitteln in Wirkverbindung steht, dass die Transfermittel desto mehr Rohgas transferieren, je höher der Rohgas-Volumenstrom im Rohgaskanal ist.

## Claims

**1.** A method for characterising an aerosol, wherein in a raw gas channel (21) with aerosol to be characterised there is a volume flow which is not temporally constant and wherein a measuring gas channel (4) for supplying measuring gas to at least one measuring unit is present, the method comprising the following method steps:

- branching-off of a partial volume flow of the raw gas from the raw gas channel through a secondary raw gas channel (31) branching-off from the raw gas channel by means of a pump (26) and heating the partial flow on a first heating path (2),
- conducting a dilution gas through the measuring gas channel (4),
- establishing the volume flow in the raw gas channel (21),
- transferring raw gas via a revolving diluter (13) from the secondary raw gas channel (31) into the measuring gas channel, which has the dilution gas flowing therethrough, wherein the transfer is controlled in such a manner, that the raw gas quantity transferred per time unit is dependent on the volume flow in the raw gas channel (21) and is greater the greater the volume flow in the raw gas channel, in such a manner, that the concentration of the suspended particles in the measuring gas channel is characteristic for an overall suspended particle through flow in the raw gas channel, and
- carrying out a measurement of suspended particles in the diluted aerosol in the measuring gas channel with the measuring unit.

**2.** The method according to claim 1, **characterised in that** the raw gas quantity transferred per time unit, apart from a possible time offset, is proportional to the volume flow in the raw gas channel (21).

**3.** The method according to any one of the preceding claims, wherein the aerosol to be characterised is heated, before and/or after the transfer into the measuring gas channel, on a heating path to a temperature at which volatile suspended particles contained in the aerosol evaporate.

**4.** The method according to claim 3, **characterised in that** the aerosol is heated to a temperature of at least 180°C and preferably to a temperature between 200°C and 400°C.

**5.** The method according to claim 3 or 4, wherein the aerosol to be characterised is heated, prior to the transfer into the measuring gas channel, on a heating path, **characterised in that** the transfer of raw gas from the raw gas channel (1, 21) into the measuring gas channel, which has the dilution gas flowing therethrough, is adjusted in such a manner that, when the aerosol subsequently cools down to an original temperature, the volatile substances no longer condense.

6. The method according to any one of the preceding claims, **characterised in that** at least a part of the aerosol in the measuring gas channel is provided with the vapour of a volatile substance in over-saturation, as a result of which the volatile substance on the surface of suspended particles condenses and thereby droplets are produced, **in that** subsequently the droplets are directed through a light beam and thereby cause a scattering light pulse, which for the purpose of counting the droplets is detected, and **in that** a scattering light pulse intensity is detected and evaluated.

7. The method according to claim 6, **characterised in that** the proportion of scattering light pulses with low intensities close to a scattering light pulse detection threshold of the quantity of all detected scattering light pulses is established.

8. A device for implementing the method according to any one of claims 1 to 7, comprising a raw gas channel (21) with an aerosol inlet, a secondary raw gas channel (31) branching off from the raw gas channel, a pump for branching off raw gas from the raw gas channel into the secondary raw gas channel (31), a first heating path (2) for heating the branched-off raw gas, a measuring gas channel with a dilution gas inlet as well as with a revolving diluter (13) as transfer means for the dosed transfer of aerosol from the raw gas channel into the measuring gas channel, and a measuring unit for measuring suspended particles in diluted aerosol in the measuring gas channel, means for determining the volume flow in the raw gas channel and a controller (12) for controlling the transfer of raw gas from the secondary raw gas channel into the measuring gas channel, wherein the controller is designed in such a manner and is actively connected to the transfer means in such a manner that the transfer means transfer more raw gas the higher the raw gas volume flow in the raw gas channel.

**Revendications**

1. Procédé de caractérisation d'un aérosol, dans lequel un débit volumique non constant d'aérosol à caractériser est établi dans un canal (21) à gaz brut, un canal (4) à gaz de mesure étant prévu pour amener du gaz de mesure à au moins une unité de mesure, le procédé présentant les étapes suivantes :

au moyen d'une pompe (26), extraction d'un débit partiel de gaz brut hors du canal à gaz brut par un canal secondaire (31) à gaz brut dérivé sur le canal à gaz brut, et échauffement du débit partiel sur un premier parcours de chauffage (2), balayage du canal (4) à gaz de mesure par un gaz de dilution,

détermination du débit volumique établi dans le canal (21) à gaz brut,

transfert de gaz brut au moyen d'un dispositif de dilution à carrousel (13), depuis le canal secondaire (31) à gaz brut jusque dans le canal à gaz de mesure balayé par le gaz de dilution, le transfert étant régulé de telle sorte que la quantité de gaz brut transférée par unité de temps dépende du débit volumique établi dans le canal (21) à gaz brut et soit d'autant plus élevé que le débit volumique dans le canal à gaz brut est plus élevé, de telle sorte que la concentration des particules en suspension dans le canal à gaz de mesure soit caractéristique d'un débit total de particules en suspension dans le canal à gaz brut et

à l'aide de l'unité de mesure, exécution d'une mesure des particules en suspension dans l'aérosol dilué présent dans le canal à gaz de mesure.

2. Procédé selon la revendication 1, **caractérisé en ce que** la quantité de gaz brut transférée par unité de temps est proportionnelle au débit volumique établi dans le canal (21) à gaz brut, compte tenu d'un éventuel décalage temporel.

3. Procédé selon l'une des revendications précédentes, dans lequel avant ou après son transfert dans un parcours de chauffage prévu dans le canal à gaz de mesure, l'aérosol à caractériser est chauffé à une température à laquelle les particules volatiles en suspension dans l'aérosol se vaporisent.

4. Procédé selon la revendication 3, **caractérisé en ce que** l'aérosol est chauffé à une température d'au moins 180° C et de préférence comprise entre 200° C et 400° C.

5. Procédé selon les revendications 3 ou 4, dans lequel l'aérosol à caractériser est chauffé dans un parcours de chauffage avant d'être transféré dans le canal à gaz de mesure, **caractérisé en ce que** le transfert du gaz brut depuis le canal (1, 21) à gaz brut jusque dans le canal à gaz de mesure balayé par un gaz de dilution est ajusté de telle sorte que les substances volatiles ne se condensent plus lors d'un refroidissement ultérieur de l'aérosol à une température initiale.

6. Procédé selon l'une des revendications précédentes, **caractérisé en ce que** dans le canal à gaz de mesure, au moins une partie de l'aérosol est dotée de la vapeur sursaturée d'une substance volatile, grâce à quoi la substance volatile se condense à la surface des particules en suspension et qu'ainsi des gouttes se forment, **en ce qu'**ensuite les gouttes sont amenées à travers un faisceau de lumière et provoquent ainsi une impulsion de lumière diffusée qui est détectée pour compter les gouttes et **en ce que** l'intensité des impulsions de lumière diffusée est détectée et évaluée.

7. Procédé selon la revendication 6, **caractérisé en ce que** la fraction des impulsions de lumière diffusée qui présente une basse intensité proche d'un seuil de détection des impulsions de lumière diffusée détectées est déterminée parmi toutes les impulsions de lumière diffusée.

8. Dispositif en vue de l'exécution du procédé selon l'une des revendications 1 à 7, le dispositif présentant :

   un canal (21) à gaz brut doté d'une entrée d'aérosol,
   un canal secondaire (31) à gaz brut branché sur le canal a gaz brut,
   une pompe d'extraction de gaz brut hors du canal à brut jusque dans le canal secondaire (31) à gaz brut,
   un premier parcours de chauffage (2) pour chauffer le gaz brut prélevé,
   un canal à gaz de mesure qui présente une entrée de gaz de dilution et un dispositif de dilution à carrousel (13) en tant que moyens de transfert (13) qui transfèrent de manière dosée l'aérosol depuis le canal à gaz brut jusque dans le canal à gaz de mesure,
   une unité de mesure qui mesure les particules en suspension dans l'aérosol dilué présent dans le canal à gaz de mesure,
   des moyens de détermination du débit volumique dans le canal à gaz brut et
   un régulateur (12) qui régule le transfert du gaz brut depuis le canal secondaire à gaz brut jusque dans le canal à gaz de mesure, le régulateur étant configuré et coopérant avec le moyen de transfert de telle sorte que les moyens de transfert transfèrent d'autant plus de gaz brut que le débit volumique de gaz brut établi dans le canal à gaz brut est plus élevé.

Fig. 1a

Fig. 1b

Fig. 2

Fig. 3

Fig. 4

Fig. 5a

Fig 5b

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6439027 B1

**In der Beschreibung aufgeführte Nicht-Patentliteratur**

- **CH. HUEGLIN ; L. SCHERRER ; H. BURTSCHER.** *J. Aersol Sci.,* 1997, vol. 28, 1049